# EUROPÄISCHE PATENTANMELDUNG

(11) **EP 1 361 012 A1**
(43) Veröffentlichungstag der Anmeldung: **12.11.2003**
(21) Anmeldenummer: 03009271.2
(22) Anmeldetag: 24.04.2003
(51) Int. Cl.: B23F 23/12, B24B 53/075

(54) **Verfahren zum Abrichten bzw. Profilieren einer im wesentlichen zylindrischen Schleifschnecke**

(30) Priorität: 08.05.2002 DE 10220513
(71) Anmelder: GLEASON-PFAUTER, Maschinenfabrik GmbH, 71636 Ludwigsburg (DE)
(72) Erfinder: Breitschaft, Fritz, 71723 Grossbottwar-Winzerhausen (DE); Faulstich, Ingo, Dr., 71634 Ludwigsburg (DE); Peiffer, Klaus, Dr., 71634 Ludwisgburg (DE)
(74) Vertreter: Jackisch-Kohl, Anna-Katharina

(57) **Zusammenfassung**

Das Verfahren wird auf einer zum kontinuierlichen Wälzschleifen im Diagonalverfahren geeigneten Maschine durchgeführt. Damit das Verfahren auch bei Arbeitsdrehzahl der abzurichtenden Schleifschnecke (7) anwendbar ist, bei dem die Schleifschnecke (7) an der späteren Arbeitsstelle abgerichtet bzw. profiliert wird, kostengünstig und genau arbeitet, nur eine geringe Abrichtzeit und minimalen Raum benötigt sowie nur eine geringe Verschmutzungsgefahr kritischer Maschinenkomponenten besteht, wird als Abrichtwerkzeug (7) ein im wesentlichen zylindrisches Zahnrad mit der Schleifschnecke (7) in Eingriff gebracht, das mit abrasivem Belag der beim Abrichten aktiven Oberfläche versehen ist. Mit dem Abrichtwerkzeug werden in einem Tangential- oder Diagonalverfahren zumindest die Flanken der Schleifschnecke (7) profiliert. Das Verfahren wird zum Abrichten von im wesentlichen zylindrischen Schleifschnecken eingesetzt.

## Beschreibung

Die Erfindung betrifft ein Verfahren zum Abrichten bzw. Profilieren einer im wesentlichen zylindrischen Schleifschnecke nach dem Oberbegriff des Anspruches 1.

Zylindrische Schleifschnecken werden zum kontinuierlichen Wälzschleifen eingesetzt. Die Wirtschaftlichkeit des Verfahrens und die Genauigkeit der bearbeiteten Zahnräder werden über den Abricht- bzw. Profilierprozeß stark beeinflußt.

Das Abrichten (Profilieren) erfolgt heutzutage meist auf der Bearbeitungsmaschine. Dazu sind Abrichteinrichtungen erforderlich. Sie sind aufwendig und benötigen hochgenaue Schlittenführungen sowie sehr genau mit der Schneckenbewegung beim Abrichten synchronisierte Bewegungen. Die Einrichtungen benötigen außerdem viel Raum und eine zum Teil recht aufwendige Abdichtung gegen Verschmutzung, zum Beispiel durch feinste Schleifspäne oder Abrichtpartikel.

Ein weiterer Nachteil der bekannten Abrichteinrichtungen ist darin zu sehen, daß aus steuerungstechnischen Gründen der Abrichtvorgang bei niedriger Schneckendrehzahl erfolgen muß. Diese Problematik nimmt mit zunehmender Gangzahl der Schleifschnecke zu. Aus diesem Sachverhalt resultiert nicht nur eine lange Abrichtzeit; vielmehr treten bei Arbeitsdrehzahl Deformationen und ggf. Verlagerungen der Schleifschnecke auf, die die Geometrie der geschliffenen Zahnräder nachteilig beeinflussen. Außerdem erfolgt das Abrichten mit den üblicherweise eingesetzten Abrichteinrichtungen nicht an der Stelle, an der später das Werkstück bearbeitet wird. Aus Genauigkeitsgründen ist es aber erwünscht, daß der Abrichtprozeß an der Stelle erfolgt, an der später die Schleifschnecke die Werkstücke bearbeitet.

Es ist ein Verfahren bekannt, bei dem ein mit Diamanten belegtes Abrichtzahnrad eine Schleifschnecke profiliert. Bei diesem Verfahren sind Schnecke und Abrichtrad unter gekreuzten Achsen angeordnet. Beide Elemente drehen entsprechend dem Verhältnis von Abrichtrad-Zähnezahl zu Schnecken-Gangzahl. Der Vorschub verläuft entweder radial bis auf Nennachsabstand mit anschließendem Freischneiden, oder beide Elemente werden auf Nennachsabstand eingestellt, und es wird eine Vorschubbewegung in Werkstück- oder Werkzeugumfangsrichtung ausgeführt. Dabei wird zunächst eine Schneckenflanke profiliert und anschließend die Richtung der Vorschubbewegung umgekehrt und die zweite Flanke aller Schnecken-Zahnlücken profiliert.

Bei diesem Verfahren erhält die Schnecke globoidähnliche Gestalt. Das Verfahren arbeitet sehr schnell. Allerdings reicht die Genauigkeit der anschließend geschliffenen Zahnräder in den meisten Fällen nicht aus, um die Räder ohne Nacharbeit der Zahnflanken, zum Beispiel durch Schabschleifen, in geräuscharme Getriebe einbauen zu können. Eine derartige Zusatzoperation ist jedoch äußerst unerwünscht.

Ein Grund für die mangelnde Genauigkeit der geschliffenen Räder liegt in einer unzureichenden Genauigkeit der Abrichträder. Grob vereinfacht betrachtet gilt: Beim Abrichten wird die Hüllgeometrie des Abrichtrades auf die Schleifschnecke übertragen; sie wird beim anschließenden Schleifen von der Schnecke auf das Werkstück übertragen. Bei der Übertragung der Hüllgeometrie vom Abrichtrad auf die Schleifschnecke liegt Linienkontakt vor. Die gesamte Oberfläche aller Flanken des Abrichtrades ist unter idealen Bedingungen an der Profilierung der Schnecke beteiligt. Alle Flankenmodifikationen, die die zu schleifenden Zahnräder erhalten sollen, müssen deshalb in das Abrichtrad gelegt werden. Demzufolge ist für jede unterschiedliche Verzahnungsauslegung ein entsprechend unterschiedlich ausgelegtes Abrichtrad erforderlich.

Der Erfindung liegt die Aufgabe zugrunde, das gattungsgemäße Verfahren so auszubilden, daß es auch bei Arbeitsdrehzahl der abzurichtenden Schleifschnecke anwendbar ist, bei dem die Schleifschnecke an der späteren Arbeitsstelle abgerichtet bzw. profiliert wird, das kostengünstig und genau arbeitet, nur eine geringe Abrichtzeit und nur minimalen Raum benötigt und bei dem nur eine geringe Verschmutzungsgefahr kritischer Maschinenkomponenten besteht.

Diese Aufgabe wird beim gattungsgemäßen Verfahren erfindungsgemäß mit den kennzeichnenden Merkmalen des Anspruches 1 gelöst.

Beim erfindungsgemäßen Verfahren ist das Abrichtwerkzeug ein im wesentlichen zylindrisches Zahnrad. Es ist zumindest im Bereich seiner aktiven Oberfläche mit einem entsprechenden abrasiven Belag versehen. Das Abrichtwerkzeug wird, zum Beispiel anstelle des Werkstückes, auf der Maschine aufgenommen. Es kann natürlich auch axial versetzt zum Werkstück auf der Werkstückspindel aufgenommen werden. Es ist weiterhin möglich, das Abrichtrad an anderer Stelle relativ zur Schleifschnecke unterzubringen. Dies erfordert allerdings höheren Aufwand.

Mit der zylindrischen Schleifschnecke lassen sich im wesentlichen zylindrische Zahnräder sehr genau im Axial- oder Diagonalverfahren herstellen. Hier kann man in der Flankenlinie unmodifizierte Abrichträder einsetzen. Derartige Abrichträder lassen sich genauer als flankenlinienmodifizierte Räder fertigen. Die an den zu bearbeitenden Zahnrädern erforderlichen Flankenlinien-Modifikationen kann man mit der zylindrischen Schleifschnecke über entsprechende Maschinenbewegungen im Axial- oder Diagonalverfahren sehr genau erzeugen.

Beim Abrichten einer im wesentlichen zylindrischen Schleifschnecke im Tangentialverfahren ist nur ein in Richtung der Abrichtradachse schmaler Streifen der Abrichtradflanken, praktisch nur eine Linie je Flanke, aktiv. Im Gegensatz dazu wird, wie schon erwähnt, zum Abrichten einer globoidähnlichen Schnecke die gesamte Oberfläche aller Flanken des Abrichtrades herangezogen. Nun läßt sich eine Linie natürlich genauer als eine Fläche herstellen. Es ist deshalb davon auszugehen, daß Räder, die mit im wesentlichen zylindrischer Schnecke geschliffen werden, genauer sind als Räder, die mit globoidähnlicher Schnecke geschliffen werden, selbst wenn beide Schnecken mit einem zahnradförmigen Abrichtrad profiliert werden. Außerdem ist, wie ebenfalls schon erwähnt, zum Abrichten globoidähnlicher Schleifschnecken für jede Verzahnungsauslegung eine andere Abrichtradauslegung erforderlich.

Aus Vorstehendem folgt, daß das Abrichten von globoidähnlichen Schieifschnecken mit zahnradförmigen Abrichträdern, insbesondere bezüglich der erzielbaren Genauigkeit und Flexibilität, wesentliche Wünsche offen läßt.

Die im wesentlichen zylindrische Schleifschnecke kann in einer Position abgerichtet werden, die sie bei der späteren Bearbeitung des Werkstückes in der Maschine einnimmt. Entgegen dem zum Abrichten zylindrischer Schleifschnecken vorliegenden Stand der Technik erhält man dadurch optimale Voraussetzungen für eine hohe Genauigkeit der Schleifschnecke und das später zu schleifende Zahnrad.

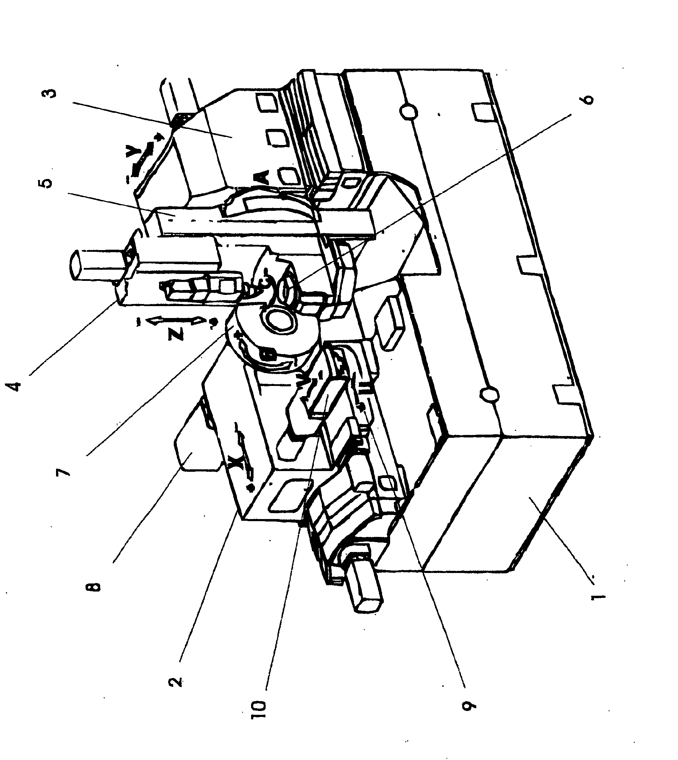

Weitere Merkmale der Erfindung ergeben sich aus den weiteren Ansprüchen, der Beschreibung und der Zeichnung.

Die Zeichnung zeigt in perspektivischer Darstellung eine Zahnrad-Wälzschleifmaschine nach dem Stand der Technik.

Die Maschine besteht aus einem Bett 1, auf dem ein Radialschlitten 2 in Richtung X und ein Tangentialschlitten 3 in Richtung Y verschiebbar angeordnet sind.

Ein Axialschlitten 4 ist verschiebbar in Richtung Z; er ist über seine linearen Führungen mit einem Schwenkschlitten 5 verbunden. Über diesen Schwenkschlitten kann der Axialschlitten 4 in Richtung A geschwenkt und, da der Schwenkschlitten 5 mit dem Tangentialschlitten 3 verbunden ist, in Richtung Y verfahren werden.

Im Axialschlitten 4 ist die Werkstückspindel 6 mit ihrem Antrieb untergebracht; sie nimmt das - hier nicht dargestellte - Werkstück auf.

Der Radialschlitten 2 trägt die Werkzeugspindel (nicht dargestellt), das als zylindrische Schleifschnecke ausgebildete Werkzeug 7 und den Werkzeugantrieb 8; er trägt ferner die Basis für die Aufnahme einer konventionellen Abrichtvorrichtung. Eine derartige Abrichteinrichtung besteht zum Beispiel aus einer oder mehreren diamantbelegten Abrichtscheiben (nicht dargestellt) mit Lagerung und Antrieb. Vorteilhaft liegt die Achse der Abrichtscheibe(n) parallel zur Drehachse der Schleifschnecke 7.

Die Abrichteinrichtung ist über einen U-Schlitten 9 in Richtung U (parallel zu X) und über einen V-Schlitten 10 in Richtung V (parallel zu Y) verschiebbar. Der Abrichtvorgang läuft zum Beispiel beim Arbeiten mit einer Abrichtscheibe folgendermaßen ab:

Die Abrichtscheibe wird in Richtung U auf Tiefe (relativ zur Schleifschnecke 7) zugestellt und in Drehung versetzt, um die Abricht-Schnittgeschwindigkeit zu erzeugen. Sie wird außerdem synchron zur Drehung der Schleifschnecke so in Richtung V verschoben, daß die geforderte Steigungshöhe der Schleifschnecke entsteht.

Das Bild zeigt deutlich, daß die Arbeitsstelle und die Abrichtstelle einander zumindest angenähert diametral zum Schneckendurchmesser gegenüberliegen; sie sollten aus Genauigkeitsgründen zusammenfallen.

Obwohl die hier empfohlenen Abrichträder gegenüber denen zum Abrichten/Profilieren globoidähnlicher Schnecken benötigten Abrichträdern wesentliche Vorteile aufweisen, lassen sich zum Abrichten/Profilieren globoidähnlicher Schnecken ausgelegte Abrichträder auch zum Abrichten/Profilieren im wesentlichen zylindrischer Schleifschnecken einsetzen. Shiften des Abrichtrades oder Arbeiten im Diagonalverfahren sind dann allerdings praktisch ausgeschlossen.

Beim erfindungsgemäßen Verfahren wird das Abrichtrad zum Beispiel anstelle des Werkstückes auf der Spindel 6 aufgenommen. Damit entfallen der U-Schlitten 9, V-Schlitten 10, die zugehörigen Führungen, Antriebe und Steuerungen der Schlittenbewegungen, die Abrichtscheiben, deren Lagerung, Antriebe und Steuerungen. Der für das Abrichtrad erforderliche Raum ist für das später erforderliche Schleifen der Werkstücke ohnehin vorhanden.

Bei diesem Verfahren ist auch nicht für jede unterschiedliche Verzahnungsauslegung ein anders ausgelegtes Abrichtrad erforderlich. Vielmehr erfordert das Profilieren bzw. Abrichten zylindrischer Schnecken für praktisch alle Räder gleichen Bezugsprofils nur eine Abrichtradauslegung. Hier ist allerdings zu beachten, daß streng genommen jede Änderung einer Profilmodifikation zu einem geänderten Werkzeug-Bezugsprofil führt. Berechnungen zeigen jedoch, daß in vielen Fällen mit einem Bezugsprofil, das eine bestimmte Profilmodifikation berücksichtigt, ein gewisses Werkstück-Teile-Spektrum bearbeitet werden kann; dies gilt insbesondere für Fälle, in denen die Profilmodifikation lediglich eine Höhenballigkeit aufweist. Das Abrichtrad erfordert keine Flankenlinienmodifikation. Es ist einfacher und genauer herstellbar als zum Abrichten globoidähnlicher Schnekken erforderliche Abrichträder. Das Abrichtrad kann praktisch einen beliebigen Schrägungswinkel, zum Beispiel auch einen Schrägungswinkel von 0°, besitzen. Das Abrichten kann bei der Schneckendrehzahl erfolgen, bei der die Schnecke später die Werkstücke bearbeitet. Es bereitet keinerlei Schwierigkeiten, selbst hochgängige Schnecken bei sehr hoher Schneckendrehzahl sehr genau abzurichten bzw. zu profilieren. Alle für das Abrichten der Schnecken im Tangential- oder Diagonalverfahren erforderlichen Bewegungen können über die ohnehin vorhandenen Maschinenachsen ausgeführt werden.

Zumindest die Flanken der in der Werkzeugspindel aufgenommenen Schleifschnecke werden in einem Tangential- oder Diagonalverfahren profiliert. Bei diesem Abrichtprozeß wird die Maschine wie eine Wälzfräsmaschine zum Schneckenradfräsen im Tangentialverfahren oder wie zum Diagonalfräsen eingesetzt. Hierbei ist es lediglich notwendig, die technologischen Größen Zustellung, Vorschub und Drehzahl der Schleifschnecke 7 auf die konkret vorliegende Abrichtaufgabe abzustimmen.

Da die Schleifschnecke mit hoher Drehzahl während des Abrichtprozesses gedreht werden kann, ergibt sich eine sehr kurze Abrichtzeit. Mit dem beschriebenen Abrichtverfahren können die rechten und die linken Flanken der Schleifschnecke 7 in einem Durchgang oder nacheinander in getrennten Durchgängen abgerichtet werden. Auch läßt sich mit dem beschriebenen Verfahren in bestimmten Fällen der Fußbereich der Schleifschnecke 7, der Kopfbereich oder der Übergang vom Kopfbereich in die Flanken in einem Durchgang abrichten.

Mit dem beschriebenen Abrichtprozeß werden die Schleifschnecken 7 sehr genau und mit großer Wirtschaftlichkeit abgerichtet. Dadurch wird erreicht, daß die mit den Schleifschnecken bearbeiteten Werkstücke/Zahnräder ebenfalls wirtschaftlich und insbesondere mit hoher Genauigkeit bearbeitet werden können.

Da das Abrichtwerkzeug beim Arbeiten im Tangentialverfahren oder im Diagonalverfahren mit geringem axialen Anteil der Vorschubbewegung in vielen Fällen nur über einen geringen Teil seiner Breite genutzt wird, kann man das Werkzeug, zum Beispiel nachdem es in einem bestimmten Bereich seiner Breite verschlissen ist, shiften und bisher ungenutzte Partien der Werkzeugbreite zum Einsatz bringen. Über diese Maßnahme lassen sich die Abricht-Werkzeugkosten deutlich senken und damit die Wirtschaftlichkeit des Abrichtprozesses steigern. Die Shiftbewegung besteht im Falle eines geradverzahnten Abrichtwerkzeuges aus einer reinen Verschiebung des Abrichtwerkzeuges in Richtung seiner Achse. Im Falle eines schräg verzahnten Abrichtwerkzeuges ist neben der Verschiebung in Richtung der Abricht-Werkzeugachse eine Zusatzdrehung entsprechend der Schraubung der Abrichtwerkzeug-Hüllschraube erforderlich.

## Patentansprüche

1. Verfahren zum Abrichten bzw. Profilieren einer im wesentlichen zylindrischen Schleifschnecke auf einer zum kontinuierlichen Wälzschleifen im Diagonalverfahren geeigneten Maschine,
**dadurch gekennzeichnet, daß** als Abrichtwerkzeug ein im wesentlichen zylindrisches Zahnrad mit der Schleifschnecke (7) in Eingriff gebracht wird, das mit abrasivem Belag der beim Abrichten aktiven Oberfläche versehen ist, und mit dem in einem Tangential- oder Diagonalverfahren zumindest die Flanken (RF, LF) der Schleifschnecke (7) profiliert werden.

2. Verfahren nach Anspruch 1,
**dadurch gekennzeichnet, daß** das Abrichtwerkzeug auf der Werkstückspindel (6) aufgenommen wird und für die Erzeugung der Abrichtbewegung zwischen Abrichtwerkzeug und Schleifschnecke (7) die an der Maschine vorhandenen Achsen verwendet werden.

3. Verfahren nach Anspruch 1 oder 2,
**dadurch gekennzeichnet, daß** unabhängig von Betrag und Vorzeichen des später zu schleifenden Werkstückes das Abrichtwerkzeug mit praktisch beliebigem Schrägungswinkel ausgeführt ist und die Schleifschnecke (7) abrichtet.

4. Verfahren nach einem der Ansprüche 1 bis 3,
**dadurch gekennzeichnet, daß** das Abrichtwerkzeug unabhängig von seiner Auslegung die Schleifschnecke (7) ein- oder mehrgängig abrichtet.

5. Verfahren nach einem der Ansprüche 1 bis 4,
**dadurch gekennzeichnet, daß** die Maschine für den Abrichtprozeß wie eine Wälzfräsmaschine zum Schneckenradfräsen im Tangentialverfahren oder aber wie zum Diagonalfräsen eingerichtet wird, wobei lediglich die technologischen Größen Zustellung, Vorschub und Drehzahl der Schleifschnecke (7) auf die konkret vorliegende Abrichtaufgabe abgestimmt werden.

6. Verfahren nach einem der Ansprüche 1 bis 5,
**dadurch gekennzeichnet, daß** die Schleifschnecke (7) beim Abrichten mit praktisch beliebiger Drehzahl gedreht wird.

7. Verfahren nach einem der Ansprüche 1 bis 6,
**dadurch gekennzeichnet, daß** die Schleifschnecke (7) beim Abrichten mit der Drehzahl gedreht wird, mit der sie auch beim späteren Schleifen des Werkstückes gedreht wird.

8. Verfahren nach einem der Ansprüche 1 bis 7,
**dadurch gekennzeichnet, daß** die Flanken (RF, LF) der Schleifschnecke (7) in einem Durchgang abgerichtet werden.

9. Verfahren nach einem der Ansprüche 1 bis 7,
**dadurch gekennzeichnet, daß** die Schleifschnecke im Tangentialverfahren oder im Diagonalverfahren mit geringem axialen Anteil abgerichtet bzw. profiliert wird und nach einer bestimmten Anzahl von Abricht- bzw. Profiliervorgängen das Abrichtwerkzeug relativ zur Schleifschnecke in Richtung der Abrichtwerkzeugachse verschoben (geshiftet) und entsprechend der Hüllschraube gedreht wird und anschließend weitere Abricht- bzw. Profiliervorgänge ausgeführt werden.
